# EUROPÄISCHE PATENTSCHRIFT

(11) **EP 1 771 928 B1**
(45) Veröffentlichungstag und Bekanntmachung des Hinweises auf die Patenterteilung: **07.08.2013**
(21) Anmeldenummer: 05776253.6
(22) Anmeldetag: 18.06.2005
(51) Int. Cl.: H02G 5/02

(54) **SAMMELSCHIENENHALTER**
BUS BAR SUPPORT
SUPPORT DE BARRE OMNIBUS

(30) Priorität: 19.07.2004 DE 102004034898
(43) Veröffentlichungstag der Anmeldung: 11.04.2007
(73) Patentinhaber: Rittal GmbH & Co. KG, 35745 Herborn (DE)
(72) Erfinder: HAUBACH, Ulrich, 35753 Greifenstein (DE)
(74) Vertreter: Tönhardt, Marion
(86) Internationale Anmeldenummer: PCT/EP2005/006594
(87) Internationale Veröffentlichungsnummer: WO 2006/007913

(56) Entgegenhaltungen:
- US-A1- 2003 096 515

## Beschreibung

Die Erfindung bezieht sich auf einen Sammelschienenhalter mit einem mit seiner Unterseite auf einer Unterlage montierbaren Unterteil, in dessen Oberseite mehrere in Längsrichtung voneinander beabstandete, zum isolierten Einlegen von in Querrichtung verlaufenden Sammelschienen ausgebildete Schienenaufnahmen eingebracht sind, und mit einem diese verschließenden, eingelegte Sammelschienen festlegenden abnehmbaren Oberteil.

Ein derartiger Sammelschienenhalter ist in der (nicht veröffentlichten) DE 103 00 723 A1 gezeigt. Bei diesem bekannten Sammelschienenhalter eines Sammelschienensystems sind, wie üblich, mehrere Sammelschienen in nach oben offene rechteckförmige Aufnahmen eines mit seiner Längsrichtung quer zur Längserstreckung der Sammelschienen gerichteten Unterteils eingelegt und darin mittels eines aufgeschraubten Oberteils festgelegt. Das Unterteil ist mit seiner Unterseite auf einer Unterlage montiert. Sind Sammelschienen unterschiedlicher Breite oder Dicke auf diese Weise festzulegen, müssen Sammelschienenhalter mit entsprechend abgestimmten Sammelschienenaufnahmen verwendet werden.

Der Erfindung liegt die Aufgabe zugrunde, einen Sammelschienenhalter der eingangs genannten Art bereitzustellen, mit dem bei einfachem Aufbau und einfacher Handhabung Sammelschienen unterschiedlicher Breite und Dicke stabil festgelegt werden können.

Diese Aufgabe wird mit den Merkmalen des Anspruches 1 gelöst. Hierbei ist vorgesehen, dass separate Schieber zum Begrenzen der Schienenaufnahmen in einer von der Unterseite zur Oberseite verlaufenden Dickenrichtung und Lagereinsätze zum Begrenzen der Schienenaufnahmen in einer quer zur Längserstreckung eingelegter Sammelschienen und in Längsrichtung des Unterteils verlaufenden Breitenrichtung vorhanden sind und dass der Sammelschienenhalter in seinen die Schienenaufnahmen umgebenden Bereichen mit Führungsstrukturen versehen ist, in denen die Schieber und die Lagereinsätze verstellbar gelagert sind.

Mit den in dieser Weise gelagerten separaten Schiebern und Lagereinsätzen ist eine variable Anpassung der Sammelschienenaufnahmen an unterschiedlich breite und/oder dicke Sammelschienen bei stabiler Lagerung möglich, wobei in den Sammelschienenaufnahmen des Sammelschienenhalters auch z.B. von Sammelschienenaufnahme zu Sammelschienenaufnahme desselben Halters unterschiedlich breite oder dicke Sammelschienen eingesetzt werden können.

Eine einfache Handhabung und Anpassung an gängige Sammelschienenquerschnitte wird dadurch erreicht, dass die Schienenaufnahmen im Längsschnitt des Unterteils Rechteckform besitzen und zur Oberseite offen sind, dass die Schieber in ihrer begrenzenden Stellung auf der Unterseite der Schienenaufnahme aufliegen und dass die Lagereinsätze in ihrer begrenzenden Stellung an einer Seitenfläche der Schienenaufnahme anliegen.

Eine einfache Ausbildung, die eine einfache Handhabung bei der Dickenanpassung ermöglicht, besteht darin, dass die Schieber U-förmig ausgebildet sind und dass die Führungsstrukturen für die Schieber als sich von einer Seitenfläche der Schienenaufnahme in beiden seitlichen Außenseiten des Unterteils parallel zur Grundseite der Schienenaufnahme erstreckende Führungsnuten ausgebildet sind, in denen die Seitenschenkel geführt sind, wobei in ausgeschobener Stellung der U-Steg mit seiner Unterseite auf der Grundseite der Schienenaufnahme aufliegt.

Eindeutige Positionierungen des Schiebers werden dadurch erhalten, dass ihre federnd ausgebildeten Seitenschenkel auf ihrer Innenseite mit Einschnappelementen versehen sind und in den Führungsnuten jeweils mindestens ein auf diese abgestimmte Einschnappgegenelemente ausgebildet sind, die derart angeordnet sind, dass die Seitenschenkel in der vollkommen eingeschobenen Position des Schiebers und/oder in der ausgezogenen Position des Schiebers federnd eingeschnappt sind, und dass in der an die Führungsnuten angrenzenden Seitenfläche der Schienenaufnahmen eine auf den U-Steg abgestimmte querverlaufende Aussparung eingebracht ist, in die der U-Steg im vollständig eingeschobenen Zustand des Schiebers vollständig eintaucht, so dass die gesamte Tiefe der Schienenaufnahme nutzbar ist. Auch diese Maßnahmen tragen zur unverlierbaren Lagerung der Schieber an dem Unterteil bei, wobei vorgesehen sein kann, dass die Schieber allenfalls unter Aufbringung zusätzlicher Kräfte über einen Anschlag in den Nuten vollständig entfernt werden können. Auch ist bei dieser Ausbildung sichergestellt, dass die Schieberaufnahme im vollkommen eingeschobenen Zustand der Schieber in ihrer ganzen Dicke zur Verfügung steht.

Eine einfache Anpassung an verschiedene Sammelschienenbreiten wird bei einfacher Handhabung mit den Maßnahmen erreicht, dass unterhalb der Schienenaufnahmen zwischen seitlichen Außenseiten-Wandbereichen des Unterteils Einsatzführungen ausgebildet sind, in denen Lagereinsätze in Normalenrichtung zum Grund der Schienenaufnahme begrenzt verstellbar gelagert sind, wobei die Lagereinsätze im vollständig abgesenkten Zustand mit ihrer Oberseite höchstens bis zum Grund der Schienenaufnahme reichen und in ihrer begrenzenden Stellung mit ihrer Rückseite an der dem Schieber gegenüberliegenden Seitenfläche der Schienenaufnahme anliegen und die lichte Breite der Schienenaufnahme von einer parallel zu dieser Seitenfläche definiert beabstandeten Vorderseite des Lagereinsatzes begrenzt ist.

Ist vorgesehen, dass die Lagereinsätze auf ihrer Vorderseite gestuft ausgebildet sind, so dass mehrere die Schienenaufnahme in Breitenrichtung definiert begrenzende Vorderseitenabschnitte gebildet sind, so ergeben sich in Abhängigkeit von der Anzahl der Stufen d.h. der damit gebildeten Vorderseitenabschnitte eine entsprechende Vielzahl von Anpassungen an unterschiedliche Sammelschienenbreiten. In Kombination mit dem separaten Schieber ergibt sich auf diese Weise eine Abstimmung an eine Vielzahl von Sammelschienen unterschiedlicher Querschnitte in Dicken- und Breitenrichtung.

Die Handhabung wird des Weiteren dadurch erleichtert, dass die Lagereinsätze mittels einer Federvorrichtung in der jeweiligen Einsatzführung abgestützt sind und im Ruhezustand bis zu ihrer Ausschiebebegrenzung in die Schienenaufnahme herausgeschoben sind. Beim Einlegen der Sammelschienen werden die Lagereinsätze gegen die Federkraft eingedrückt, sofern erforderlich, um eine breitere Sammelschiene einzusetzen.

Dabei besteht eine für den Aufbau und die Funktionsweise vorteilhafte Ausgestaltung darin, dass die Federvorrichtung eine Druckfeder aufweist, die auf einem im Bereich der Unterseite des Unterteils lösbar eingesetzten Abstützteil abgestützt ist. Für die Herstellung und den Aufbau des Sammelschienenhalters sind des Weiteren die Maßnahmen von Vorteil, dass das Abstützteil auf zwei sich gegenüberliegenden Außenrändern mit Fixierabschnitten versehen ist, die in daran angepassten Fixierelementen an den Außenseiten-Wandbereichen des Unterteils verrastet sind.

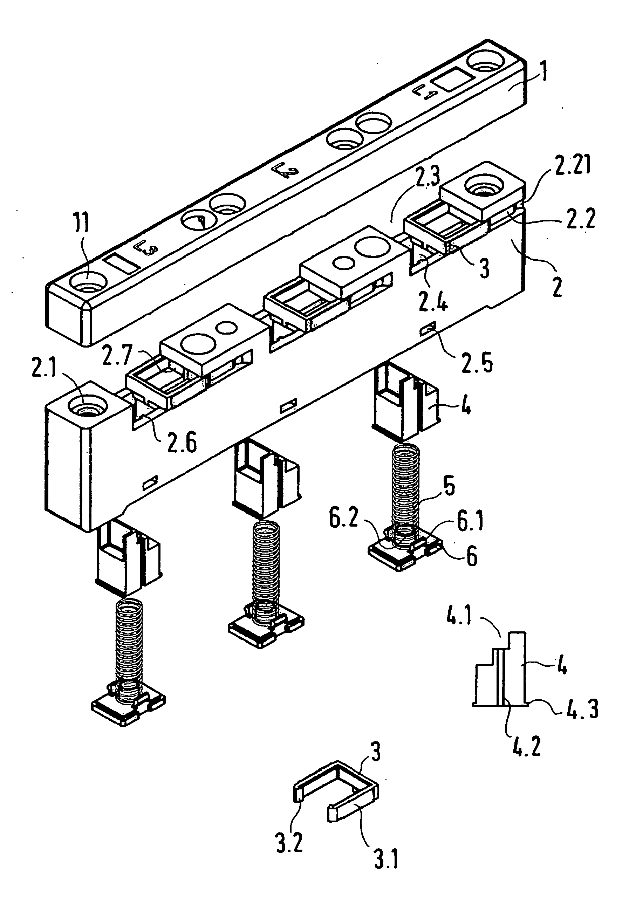

Die Erfindung wird nachfolgend anhand eines Ausführungsbeispiels unter Bezugnahme auf die Zeichnung näher erläutert.

Die Fig. zeigt einen Sammelschienenhalter mit einem auf einer Unterlage mit seiner Unterseite montierbaren Unterteil 2, in dessen von der Unterseite abgewandter Oberseite mehrere, vorliegend drei Sammelschienenaufnahmen 2.3 ausgebildet sind, in denen Sammelschienen insbesondere rechteckförmigen Querschnitts aufnehmbar sind, die mittels eines aufzuschraubenden oder aufzurastenden Oberteils 1 festgelegt werden. Zum Festschrauben weist das Oberteil 1 Schraubdurchführungen 1.1 auf, die mit Schraubaufnahmen 2.1 in dem Unterteil 2 korrespondieren.

Die Schienenaufnahmen 2.3 können in ihrer Dicke (Tiefe) und ihrer in Längsrichtung des Unterteils 2 gerichteten Breite mittels eingesetzter Schieber 3 bzw. davon separater Lagereinsätze 4 variiert werden, um eine Anpassung an Sammelschienen unterschiedlicher Breite und/oder Dicke vorzunehmen. Zum Einsetzen der Schieber 3 sind dazu angrenzend an eine die Schienenaufnahme 2.3 in Breitenrichtung begrenzende Seitenwand parallal zur Unterseite der Schienenaufnahme 2.3 auf beiden Außenseiten des Unterteils 2 im Querschnitt U-förmige Führungsnuten 2.2 eingebracht, deren Unterseite vorliegend bündig mit der Unterseite der Schienenaufnahme 2.3 verläuft und deren Breite an die in Tiefenrichtung der Schienenaufnahme 2.3 gerichtete Dicke der Schieber 3 angepasst ist, wobei Seitenschenkel 3.1 der U-förmigen Schieber 3 in den Führungsnuten 2.2 verschieblich geführt sind. Im Nutgrund der Führungsnuten 2.2 sind auf deren zu der Schienenaufnahme 2.3 hin gelegenem Endbereich und auf deren von der Schienenaufnahme 2.3 abgelegenem Endbereich Halteelemente 2.21 in Form von Vertiefungen ausgebildet, in die auf den Innenseiten der Seitenschenkel 3.1 an deren Endbereichen angeformte Rastnasen 3.2 unter Federwirkung der Seitenschenkel 3.1 einschnappen, wenn der betreffende Schieber 3 vollständig eingeschoben bzw. in die ausgezogene Stellung gebracht ist. In der vollständig eingeschobenen Stellung liegt der U-Steg des Schiebers 3 zudem vollständig in einer zwischen den beiden betreffenden Führungsnuten 2.2 in der zugehörigen Seitenfläche der Schieberaufnahme 2.3 ausgebildeten Aussparung 2.7, so dass die Schienenaufnahme 2.3 in ihrer Tiefe unbegrenzt zur Verfügung steht. Im ausgezogenen Zustand der Schieber 3 liegen diese auf der Unterseite der Schienenaufnahmen 2.3 mit der Unterseite ihrer Seitenschenkel 2.1 und ihres U-Stegs auf, so dass die Schienenaufnahme 2.3 entsprechend in ihrer Tiefe begrenzt wird und eine eingelegte Sammelschiene stabil gegen das Unterteil 2 abgestützt wird. Die Seitenschenkel 3.1 sind auf ihrer Außenseite mit einer griffigen Struktur versehen, so dass sie leicht handhabbar verstellt werden können. Vorteilhaft ist auch, dass die Schieber 3 unverlierbar in den Führungsnuten 2.2 des Unterteils 2 gehalten sind.

Zum Variieren der Breite der Schienenaufnahmen 2.3 sind in Dickenrichtung der Sammelschiene bzw. Tiefenrichtung der Schienenaufnahme 2.3 verschiebbare Lagereinsätze 4 vorhanden, die in einer zwischen Außenseiten-Wandbereichen des Unterteils 2 angeordneten Einsatzführung 2.4 verschiebbar gelagert sind. Die Lagereinsätze 4 liegen im nach oben herausgeschobenen Zustand, in dem sie die betreffende Schienenaufnahme 2.3 in Breitenrichtung mit ihrer der Aufnahme zugewandten Vorderseite begrenzen, mit ihrer Rückseite an der betreffenden, von dem Schieber 3 abgewandten Seitenfläche der Schienenaufnahme 2.3 an, so dass sich eine stabile Abstützung in Breitenrichtung ergibt. Auf ihrer zum lichten Raum der Schienenaufnahme 2.3 gerichteten Vorderseite weisen die Lagereinsätze 4 mehrere mittels Abstufungen 4.1 gebildete Vordersei-tenabschnitte auf, die parallel zur Seitenfläche der Schienenaufnahme 2.3 verlaufen. Auf diese Weise werden je nach Ausschiebeweg der Lagereinsätze 4 aus der Einsatzführung 2.4 unterschiedliche Breiten der Schienenaufnahmen 2.3 erzielt, so dass entsprechend unterschiedlich breite Sammelschienen stabil festgelegt werden können.

Nach unten sind die Lagereinsätze 4 mittels einer jeweiligen Druckfeder 5 auf einem Abstützteil 6 abgestützt, das im Unterseitenbereich des Unterteils 2 fixiert ist. Zum Einsetzen der Feder 5 weist das plattenförmige Abstützteil 6 auf seiner Oberseite einen an die zylindrische Feder 5 angepassten, angeformten Haltezapfen 6.2 auf. Mit ihrem anderen Ende wird die Feder 5 im Bereich der Unterseite bzw. Innenseite des Lagereinsatzes 4 an einem angepassten Haltestück definiert gehalten. Damit der Lagereinsatz 4 eindeutig in Dickenrichtung der Sammelschiene geführt wird, sind an diesem beidseitig in Dickenrichtung verlaufende Führungsnuten eingebracht, in die auf der Innenseite der Außenseiten-Wandabschnitte angeformte Führungselemente 2.6 in Form von Führungsstegen eingreifen. In der vollständig eingeschobenen Stellung des Lagereinsatzes 4 ragt dieser mit seiner Oberseite höchstens bis in die Ebene der Unterseite der Schienenaufnahme 2.3 vor. Die ausgeschobene Stellung des Lagereinsatzes 4 wird mittels mindestens eines Begrenzungselementes 4.3 begrenzt, das mit einem an entsprechender Stelle des Unterteils 2 angebrachten Begrenzungsgegenelement zusammenwirkt.

Das Abstützteil 6 ist mit beidseitig angebrachten Fixierabschnitten 6.1 in Form von Rastzapfen und Rastnasen auf der Innenseite im unteren Bereich der Außenseiten-Wandabschnitte an an entsprechender Stelle angebrachten Fixierelementen 2.5 in Form von Rastausnehmungen und zum Abstützen der Feder 5 stabil und lösbar verrastet.

Die Schieber 3 und die davon getrennt einstellbaren Lagereinsätze 4 lassen Anpassungen der Schienenaufnahme 2.3 an verschieden dicke und verschieden breite Sammelschienen auf einfache Weise zu, wobei die Verstellelemente in Form der Schieber und Lagereinsätze 4 unverlierbar in dem Unterteil 2 gehalten sind. Zum Einlegen einer Sammelschiene wird zunächst der Schieber 3 entsprechend der Dicke der Sammelschiene in die eingeschobene oder ausgezogene Stellung gebracht, wonach die Sammelschiene mit ihrer Unterseite in die Schienenaufnahme 2.3 eingeführt wird, wobei die eine schmale Längsseite an der dem Schieber 3 zugekehrten Seitenfläche der Schienenaufnahme 2.3 in Anlage gebracht ist, so dass die andere schmale Längsseite automatisch den betreffenden Vorderseitenabschnitt des Lagereinsatzes 4 zur Begrenzung vorfindet und der Lagereinsatz 4 dabei erforderlichenfalls entsprechend weit in die Einsatzführung 2.4 gegen die Federkraft eingeschoben wird.

Vorteilhaft ist es, die Schienenaufnahme 2.3, Schieber 3 und Lagereinsätze 4 entsprechend gängiger Querschnittsabmessungen von Sammelschienen abzustimmen, z.B. von 15x5 bis 30x10 mm in Abstufungen in Dicke und Breite von 5 mm. In die verschiedenen Sammelschienenaufnahmen 2.3 können dabei auch Sammelschienen voneinander abweichenden Querschnitts eingelegt werden.

## Patentansprüche

1. Sammelschienenhalter mit einem mit seiner Unterseite auf einer Unterlage montierbaren Unterteil (2), in dessen Oberseite mehrere in Längsrichtung voneinander beabstandete, zum isolierten Einlegen von in Querrichtung verlaufenden Sammelschienen ausgebildete Schienenaufnahmen (2.3) eingebracht sind, und mit einem diese verschließenden, eingelegte Sammelschienen festlegenden, abnehmbaren Oberteil (1),
**dadurch gekennzeichnet,**
**dass** separate Schieber (3) zum Begrenzen der Schienenaufnahmen (2.3) in einer von der Unterseite zur Oberseite verlaufenden Dickenrichtung und Lagereinsätze (4) zum Begrenzen der Schienenaufnahmen (2.3) in einer quer zur Längserstreckung eingelegter Sammelschienen verlaufenden Breitenrichtung vorhanden sind und
**dass** der Sammelschienenhalter in seinen die Schienenaufnahmen (2.3) umgebenden Bereichen mit Führungsstrukturen (2.2, 2.4) versehen ist, in denen die Schieber (3) und die Lagereinsätze (4) verstellbar gelagert sind.

2. Sammelschienenhalter nach Anspruch 1,
**dadurch gekennzeichnet,**
**dass** die Schienenaufnahmen (2.3) im Längsschnitt des Unterteils (2) Rechteckform besitzen und zur Oberseite offen sind,
**dass** die Schieber (3) in ihrer begrenzenden Stellung auf der Unterseite der Schienenaufnahme (2.3) aufliegen und
**dass** die Lagereinsätze (4) in ihrer begrenzenden Stellung an einer Seitenfläche der Schienenaufnahme (2.3) anliegen.

3. Sammelschienenhalter nach Anspruch 1 oder 2,
**dadurch gekennzeichnet,**
**dass** die Schieber (3) U-förmig ausgebildet sind und
**dass** die Führungsstrukturen für die Schieber (3) als sich von einer Seitenfläche der Schienenaufnahme (2.3) in beiden seitlichen Außenseiten des Unterteils (2) parallel zur Grundseite der Schienenaufnahme (2.3) erstreckende Führungsnuten (2.2) ausgebildet sind, in denen die Seitenschenkel (3.1) geführt sind, wobei in ausgeschobener Stellung der U-Steg mit seiner Unterseite auf der Grundseite der Schienenaufnahme (2.3) aufliegt.

4. Sammelschienenhalter nach Anspruch 3,
**dadurch gekennzeichnet,**
**dass** die federnd ausgebildeten Seitenschenkel (3.1) auf ihrer Innenseite mit Einschnappelementen (3.2) versehen sind und in den Führungsnuten (2.2) jeweils mindestens ein auf diese abgestimmte Einschnappgegenelemente (2.21) ausgebildet sind, die derart angeordnet sind, dass die Seitenschenkel (3.1) in der vollkommen eingeschobenen Position des Schiebers (3) und/ oder in der ausgezogenen Position des Schiebers (3) federnd eingeschnappt sind, und
**dass** in der an die Führungsnuten (2.2) angrenzenden Seitenfläche der Schienenaufnahmen (2.3) eine auf den U-Steg abgestimmte querverlaufende Aussparung (2.7) eingebracht ist, in die der U-Steg im vollständig eingeschobenen Zustand des Schiebers (3) vollständig eintaucht, so dass die gesamte Tiefe der Schienenaufnahme (2.3) nutzbar ist.

5. Sammelschienenhalter nach einem der vorhergehenden Ansprüche,
**dadurch gekennzeichnet,**
**dass** unterhalb der Schienenaufnahmen (2.3) zwischen seitlichen Außenseiten-Wandbereichen des Unterteils (2) Einsatzführungen (2.4) ausgebildet sind, in denen Lagereinsätze (4) in Normalenrichtung zum Grund der Schienenaufnahme (2.3) begrenzt verstellbar gelagert sind, wobei die Lagereinsätze (4) im abgesenkten Zustand mit ihrer Oberseite höchstens bis zum Grund der Schienenaufnahme (2.3) reichen und in ihrer begrenzenden Stellung mit ihrer Rückseite an der dem Schieber (3) gegenüberliegenden Seitenfläche der Schienenaufnahme (2.3) anliegen und die lichte Breite der Schienenaufnahme (2.3) von einer parallel zu dieser Seitenfläche definiert beabstandeten Vorderseite begrenzt ist.

6. Sammelschienenhalter nach Anspruch 5,
**dadurch gekennzeichnet,**
**dass** die Lagereinsätze (4) auf ihrer Vorderseite gestuft ausgebildet sind, so dass mehrere die Schienenaufnahme (2.3) in Breitenrichtung definiert begrenzende Vorderseitenabschnitte gebildet sind.

7. Sammelschienenhalter nach einem der vorhergehenden Ansprüche,
**dadurch gekennzeichnet,**
**dass** die Lagereinsätze (4) mittels einer Federvorrichtung in der jeweiligen Einsatzführung (2.4) abgestützt sind und im Ruhezustand bis zu ihrer Ausschiebebegrenzung in die Schienenaufnahme (2.3) herausgeschoben sind.

8. Sammelschienenhalter nach Anspruch 7,
**dadurch gekennzeichnet,**
**dass** die Federvorrichtung eine Druckfeder (5) aufweist, die auf einem im Bereich der Unterseite des Unterteils (2) lösbar eingesetzten Abstützteil (6) abgestützt ist.

9. Sammelschienenhalter nach Anspruch 8,
**dadurch gekennzeichnet,**
**dass** das Abstützteil (6) auf zwei sich gegenüberliegenden Außenrändern mit Fixierabschnitten (6.1) versehen ist, die in daran angepassten Fixierelementen (2.5) an den Außenseiten-Wandbereichen des Unterteils (2) verrastet sind.

## Claims

1. A bus bar support, having a lower element (2) which can be mounted with an underside thereof on a base, and a top into which several bus bar receptacles (2.3) are cut, which are spaced apart from each other in a longitudinal direction and are designed for the insulated insertion of bus bars extending in a transverse direction, and a removable upper element (1), which closes the receptacles and fixes in place the inserted bus bars, **characterized in that**
separate sliding elements (3) are provided for blocking the bus bar receptacles (2.3) in a thickness direction extending from a bottom to a top, and bearing inserts (4) for blocking the bus bar receptacles (2.3) in a direction extending transversely to a longitudinal extension of inserted bus bars, and that
surrounding the bus bar receptacles (2.3) the bus bar support has guide structures (2.2, 2.4) in which the sliding elements (3) and the bearing inserts (4) are displaceably seated.

2. The bus bar support in accordance with claim 1, **characterized in that** the bus bar receptacles (2.3) have a rectangular shape in a longitudinal section of the lower element (2) and are open toward the top, that in a blocking position each of the sliding elements (3) rests on the underside of the bus bar receptacle (2.3), and that in the blocking position each of the bearing inserts (4) rests against a lateral face of the bus bar receptacle (2.3).

3. The bus bar support in accordance with claim 1 or 2, **characterized in that** the sliding elements (3) are U-shaped and that the guide structures for the sliding elements (3) are guide grooves (2.2) which extend from a lateral surface of the bus bar receptacle (2.3) to both lateral outer sides of the lower element (2) parallel with a base of the bus bar receptacle (2.3) in which lateral legs (3.1) are guided, wherein in a pushed-out position a bottom of the U-shape rests with an underside on the base of the bus bar receptacle (2.3).

4. The bus bar support in accordance with claim 3, **characterized in that** the lateral legs (3.1) are resilient and have on an inside a snap-in element (3.2), and at least one matched snap-in counter element (2.21) embodied in the guide grooves (2.2) and arranged so that in at least one of a completely inserted position of the sliding element (3) and a pulled-out position of the sliding element (3), the lateral legs (3.1) are resiliently snapped in, and that on a side face of the bus bar receptacles (2.3) adjoining the guide grooves (2.2) a transversely extending cutout (2.7) is matched to the bottom of the U-shape, into which the bottom of the U-shaped sliding element (3) completely enters in the completely pushed-in state of the sliding element (3), so that the entire depth of the bus bar receptacle (2.3) is usable.

5. The bus bar support in accordance with any of the preceding claims, **characterized in that** insert guides (2.4) are formed below the bus bar receptacles (2.3) between lateral outside wall areas of the lower element (2), in which bearing inserts (4) are seated and displaceable to a limited extent in a direction of a normal line with respect to the bottom of the bus bar receptacle (2.3) wherein, in a lowered state the bearing inserts (4) reach with their tops at most the bottom of the bus bar receptacle (2.3), and in the blocking position rest with their backs on a lateral surface of the bus bar receptacle (2.3) located opposite the sliding element (4), and a clear width of the bus bar receptacles (2.3) is limited by a front which is distanced parallel from the lateral surface.

6. The bus bar support in accordance with claim 5, **characterized in that** fronts of the bearing inserts (4) are stepped to form several front sections which definitely limit the bus bar receptacles (2.3) in a width direction.

7. The bus bar support in accordance with any of the preceding claims, **characterized in that** the bearing inserts (4) are supported by a spring arrangement in the respective insert guides (2.4) and in a rest position are pushed out into the bus bar receptacle (2.3) as far as a push-out limit.

8. The bus bar support in accordance with claim 7, **characterized in that** the spring arrangement has a compression spring (5) supported on a support element (6) which is releasably inserted near the underside of the lower element (2).

9. The bus bar support in accordance with claim 8, **characterized in that** on two oppositely located outer edges the support element (6) has fixation sections (6.1) snapped into matched fixation elements (2.5) on the outside wall areas of the lower element (2).

## Revendications

1. Support de barres omnibus, comportant une partie inférieure (2), qui est destinée à être montée avec sa face inférieure sur une base et dans la face supérieure de laquelle sont ménagés plusieurs logements pour barre (2.3), écartés les uns des autres dans le sens longitudinal et conçus pour la pose isolée de barres omnibus orientées dans le sens transversal, et comportant une partie supérieure (1) amovible, obturant lesdits logements et immobilisant les barres omnibus posées,
**caractérisé**
**en ce qu'**il est prévu des coulisses (3) séparées, destinées à délimiter les logements pour barre (2.3) dans le sens de l'épaisseur, orienté de la face inférieure vers la face supérieure, et des inserts d'appui (4) destinés à délimiter les logements pour barre (2.3) dans le sens de la largeur, orienté transversalement à la dimension longitudinale des barres omnibus posées, et
**en ce que** ledit support de barres omnibus, dans ses zones entourant les logements pour barre (2.3), est muni de structures de guidage (2.2, 2.4), dans lesquelles les coulisses (3) et les inserts d'appui (4) sont montés de manière mobile.

2. Support de barres omnibus selon la revendication 1, **caractérisé**
**en ce que** les logements pour barre (2.3) ont une forme rectangulaire sur une coupe longitudinale de la partie inférieure (2) et sont ouverts vers la face supérieure,
**en ce que** les coulisses (3) dans leur position de délimitation sont en appui sur la face inférieure du logement pour barre (2.3), et
**en ce que** les inserts d'appui (4) dans leur position de délimitation sont en appui sur une surface latérale du logement pour barre (2.3).

3. Support de barres omnibus selon la revendication 1 ou 2, **caractérisé**
**en ce que** les coulisses (3) sont réalisées avec une forme en U, et
**en ce que** les structures de guidage pour les coulisses (3) sont réalisées sous la forme de rainures de guidage (2.2), lesquelles s'étendent depuis une surface latérale des logements pour barre (2.3) vers les deux faces extérieures latérales de la partie inférieure (2) parallèlement au fond du logement pour barre (2.3), et dans lesquelles sont guidées les branches latérales (3.1), la traverse du U, dans la position extraite, étant en appui avec sa face inférieure sur le fond du logement pour barre (2.3).

4. Support de barres omnibus selon la revendication 3, **caractérisé**
**en ce que** les branches latérales (3.1), réalisées de manière flexible, sont munies sur leur face intérieure d'éléments d'encliquetage (3.2), et des éléments d'encliquetage inverses (2.21) adaptés à ces derniers sont réalisés, au moins au nombre d'un, dans chacune des rainures de guidage (2.2) et sont disposés de telle sorte que, dans la position entièrement rentrée de la coulisse (3) et/ou dans la position extraite de la coulisse (3), les branches latérales (3.1) sont encliquetées de manière flexible, et
**en ce que** dans la surface latérale des logements pour barre (2.3), laquelle est adjacente aux rainures de guidage (2.2), est ménagé un évidement (2.7), qui est orienté transversalement de manière adaptée à la traverse du U et dans lequel s'insère intégralement la traverse du U dans la position entièrement rentrée de la coulisse (3), de telle sorte que toute la profondeur du logement pour barre (2.3) est utilisable.

5. Support de barres omnibus selon l'une quelconque des revendications précédentes, **caractérisé**
**en ce que**, en dessous des logements pour barre (2.3), entre des zones des parois latérales extérieures de la partie inférieure (2) sont réalisés des guidages (2.4) dans lesquels des inserts d'appui (4) sont montés de manière mobile et limitée dans le sens de la normale au fond du logement pour barre (2.3), lesdits inserts d'appui (4), dans la position abaissée, parvenant avec leur face supérieure au maximum jusqu'au au fond du logement pour barre (2.3) et, dans leur position de délimitation, venant en appui avec leur face arrière contre la surface latérale du logement pour barre (2.3), laquelle est située en regard de la coulisse (3), et la largeur intérieure du logement pour barre (2.3) est limitée par une face avant écartée de manière définie par une surface latérale parallèle audit logement pour barre.

6. Support de barres omnibus selon la revendication 5, **caractérisé**
**en ce que** les inserts d'appui (4) sont étagés sur leur face avant de manière à former plusieurs portions de face avant délimitant de manière définie le logement pour barre (2.3) dans le sens de la largeur.

7. Support de barres omnibus selon l'une quelconque des revendications précédentes, **caractérisé**
**en ce que** les inserts d'appui (4) sont soutenus par un dispositif à ressort dans le guidage (2.4) respectif et, dans la position de repos, sont extraits jusqu'à leur limite d'extraction dans le logement pour barre (2.3).

8. Support de barres omnibus selon la revendication 7, **caractérisé**
**en ce que** le dispositif à ressort comporte un ressort de pression (5), qui prend appui sur une partie d'appui (6) insérée de manière amovible dans la zone de la face inférieure de la partie inférieure (2).

9. Support de barres omnibus selon la revendication 8, **caractérisé**
**en ce que** la partie d'appui (6), sur deux bords extérieurs opposés, est munie de portions de fixation (6.1) qui se bloquent dans des éléments de fixation (2.5) adaptés à celles-ci, dans des zones des parois latérales extérieures de la partie inférieure (2).
